# EUROPÄISCHE PATENTSCHRIFT

(11) **EP 0 588 314 B1**
(45) Veröffentlichungstag und Bekanntmachung des Hinweises auf die Patenterteilung: **18.12.1996**
(21) Anmeldenummer: 93114817.5
(22) Anmeldetag: 15.09.1993
(51) Int. Cl.: C08G 18/62

(54) **Überzugsmittel, Verfahren zu dessen Herstellung und dessen Verwendung zur Herstellung transparenter Deckschichten auf Mehrschichtüberzügen**
Coating, process for its preparation and use in the preparation of clear-coat top layers of multi-layer coatings
Revêtement, procédé de préparation et utilisation pour la préparation des couches de couverture transparentes sur des revêtements multicouches

(30) Priorität: 17.09.1992 DE 4231071; 30.10.1992 DE 4236673
(43) Veröffentlichungstag der Anmeldung: 23.03.1994
(73) Patentinhaber: Herberts Gesellschaft mit beschränkter Haftung, 42285 Wuppertal (DE)
(72) Erfinder: Bederke, Klaus, Dr., D-42277 Sprockhövel (DE); Herrmann, Friedrich, D-42105 Wuppertal (DE); Kerber, Hermann, D-42369 Wuppertal (DE); Schönrock, Hans-Martin, D-42289 Wuppertal (DE); Dahm, Ralf, D-42929 Wermelskirchen (DE)
(74) Vertreter: Türk, Gille, Hrabal, Leifert

(56) Entgegenhaltungen:
- EP-A- 0 129 124
- EP-A- 0 349 818
- DE-A- 3 918 968
- US-A- 5 098 956

## Beschreibung

Die Erfindung betrifft ein Überzugsmittel, das zur Herstellung transparenter Deckschichten auf Mehrschichtüberzügen geeignet ist.

Überzugsmassen zur Herstellung transparenter Deckschichten auf Mehrschichtüberzügen sind bekannt. In der DE-A-33 22 037 werden derartige Überzugsmassen beschrieben, die auf (Meth)acryl-Copolymerisaten basieren. Diese Überzugsmittel enthalten ein Gemisch aus speziellen (Meth)acryl-Copolymerisaten, die bei der Verarbeitung einen Festkörpergehalt bis zu 55 Gew.-% ermöglichen.

Aus Gründen des Umweltschutzes und der Sicherheit am Arbeitsplatz ist es jedoch erwünscht, die Festkörpergehalte von Überzugsmitteln, die insbesondere im Sprühverfahren aufgetragen werden, weiter zu steigern, um damit den Gehalt an flüchtigen und gegebenenfalls toxischen Lösemitteln weiter herabsetzen zu können. Aus den gleichen Gründen sollte auf die Verwendung von Schwermetall-Katalyse, wie sie bei diesen Systemen in der Praxis üblich ist, verzichtet werden.

Aufgabe der Erfindung ist daher die Bereitstellung eines Überzugsmittels, das insbesondere zur Herstellung von transparenten Deckschichten in Mehrschichtüberzügen geeignet ist, das mit erhöhtem Festkörpergehalt aufgetragen werden kann und einen guten Verlauf sowie einen hervorragenden Decklackstand ergibt.

Es hat sich gezeigt, daß diese Aufgabe gelöst werden kann durch ein Überzugsmittel, das einen Gegenstand der vorliegenden Erfindung bildet und das Bindemittel auf der Basis eines oder mehrerer (Meth)acryl-Copolymerisate enthält, die sich als Gemisch aus
- A) 40 - 60 Gew.-%: eines oder mehrerer hydroxylgruppenhaltiger (Meth)acryl-Copolymerisate, erhältlich durch Copolymerisation von
a1) 50 - 70 Gew.-% eines oder mehrerer Acrylsäureester, die im Gemisch mit einem solchen Anteil eines oder mehrerer Acrylsäure-hydroxyalkylester vorliegen, daß die Hydroxylzahl des Gemisches 40 - 70 mg KOH/g beträgt, und
a2) 30 - 50 Gew.-% eines oder mehrerer Methacrylsäureester, die im Gemisch mit einem solchen Anteil eines oder mehrerer Methacrylsäure-hydroxyalkylester vorliegen, daß die Hydroxylzahl des Gemisches 180 - 450 mg KOH/g beträgt, und
- B) 60 - 40 Gew.-%: eines oder mehrerer hydroxylgruppenhaltiger (Meth)acryl-Copolymerisate, die erhältlich sind durch Copolymerisation von:
b1) 27 - 40 Gew.-% eines oder mehrerer Acrylsäure-alkylester,
b2) 49 - 55 Gew.-% eines oder mehrerer Methacrylsäureester, die im Gemisch mit einem solchen Anteil eines oder mehrerer Methacrylsäure-hydroxyalkylester vorliegen, daß die Hydroxylzahl des Gemisches 240 - 300 mg KOH/g beträgt,
b3) 1 - 3 Gew.-% Acrylsäure,
b4) 10 - 15 Gew.-% eines oder mehrerer Vinylester aliphatischer gesättigter Monocarbonsäuren, bei denen die Carboxylgruppe an ein tertiäres Kohlenstoffatom gebunden ist,
wobei die Summe der Komponenten A) und B), die Summe der Komponenten a1) und a2) sowie die Summe der Komponenten b1) bis b4) jeweils 100 Gew.-% beträgt, zusammensetzen.

Die erfindungsgemäßen Überzugsmittel enthalten neben den beiden vorstehend definierten (Meth)acryl-Copolymerisaten als Vernetzer ein oder mehrere aliphatische und/oder cycloaliphatische Polyisocyanate, die auch im Gemisch vorliegen können. Die Überzugsmittel enthalten zudem ein oder mehrere organische Lösemittel, sowie lackübliche Additive, beispielsweise Lichtschutzmittel.

Die Herstellung der in dem erfindungsgemäßen Überzugsmittel enthaltenen (Meth)acryl-Copolymerisate kann durch Polymerisation nach üblichen Verfahren, z.B. der Substanz-, Lösungs- oder Perlpolymerisation durchgeführt werden. Die verschiedenen Polymerisationsverfahren sind gut bekannt und beschrieben in: Houben-Weyl, Methoden der Organischen Chemie, 4. Aufl., Band 14/1, S. 24 - 255 (1961).

Das Lösungspolymerisationsverfahren wird für die Herstellung der im erfindungsgemäßen Überzugsmittel eingesetzten (Meth)acryl-Copolymerisate bevorzugt. Bei diesem Verfahren wird das Lösemittel in das Reaktionsgefäß verlegt, auf Siedetemperatur geheizt und das Monomeren/Initiatorgemisch kontinuierlich in einer bestimmten Zeit zudosiert.

Die Polymerisation wird bei Temperaturen zwischen 60°C und 160°C, vorzugsweise bei 120°C bis 150°C durchgeführt.

Die Polymerisationsreaktion wird mit bekannten Polymerisationsinitiatoren gestartet. Geeignete Initiatoren sind Per- und Azo-Verbindungen, die in einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethyl-hexanoat, tert.-Butyl-per-2-ethylhexanoat; Peroxydicarbonate, wie Di-2-ethylhexyl-peroxydicarbonat, Dicyclo-hexyl-peroxydicarbonat; Perketale, wie 1,1-Bis-(tert.-butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid; Azo-Verbindungen, wie 2,2'-Azo-bis(2,4-dimethylvaleronitril) ,2,2'-Azo-bis(2-methylbutyronitril),1,1'-Azo-bis-cyclohexancarbonitril, Azo-bis-isobutyronitril.

Es sind bevorzugt die Peroxidinitiatoren, insbesondere die Perester in einer Menge von 3 bis 8 Gew.-% auf der Monomeren-Einwaage, einzusetzen.

Als organische Lösemittel, die zweckmäßigerweise bei der Lösungspolymerisation sowie später auch in dem erfindungsgemäßen Überzugsmittel eingesetzt werden, eignen sich beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxy-propylacetat, Ester, wie Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen) und aliphatische Kohlenwasserstoffe können ebenfalls im Verschnitt mit den oben genannten Lösemitteln eingesetzt werden.

Zur Regelung des Molekulargewichts können insbesondere bei der bevorzugten Lösungspolymerisation Kettenüberträger mitverwendet werden. Beispiele sind Mercaptane, Thioglykolsäureester, Chlor-Kohlenwasserstoffe, Cumol, dimeres α-Methylstyrol.

Die Polymerisationsbedingungen (Reaktionstemperatur, Zulaufzeit der Monomerenmischung, Lösungskonzentration) werden so eingerichtet, daß die (Meth) acryl-Copolymerisate für das erfindungsgemäß hergestellte Überzugsmittel ein Gewichtsmittel des Molekulargewichts (bestimmt durch Gelpermeations-chromatographie unter Verwendung von Polystyrol als Eichsubstanz) zwischen 3000 - 5000 für Komponente A) und 5000 - 8000 für Komponente B) aufweisen.

Die hydroxylgruppenhaltigen (Meth)acryl-Copolymerisate des erfindungsgemäß hergestellten Überzugsmittels liegen in einem Glasübergangstemperatur-Bereich von 10°C bis + 30°C für Komponente A) und + 20°C bis 50°C für Komponente B), berechnet aus der Glasübergangstemperatur der Homopolymerisate der einzelnen der in der Literatur angegebenen Monomeren (FOX-Gleichung, s. z.B. Polymere Werkstoffe, Batzer, 1985, Seite 307).

Die Hydroxylzahl der gesamten Komponente A) liegt bevorzugt bei 120 bis 170 mg KOH/g. Die Hydroxylzahl der gesamten Komponente B) liegt bevorzugt bei 120 bis 160 mg KOH/g.

Als Monomerkomponenten für die Herstellung der hydroxylgruppenhaltigen (Meth)acryl-Copolymerisate (Komponente A) und B) werden Alkyester der Acrylsäure oder Methacrylsäure eingesetzt: Methylacrylat, Methylmethacrylat, Ethylacrylat, Ethylmethacrylat, Iso-Propylmethacrylat, tert.-Butylacrylat, n-Butylacrylat, n-Butylmethacrylat, Iso-Butylacrylat, Iso-Butylmethacrylat, Cyclohexylmethacrylat, Trimethylcyclohexylmethacrylat, 2-Ethylhexylacrylat, 2-Ethylhexylmethacrylat, Laurylacrylat, Laurylmethacrylat, Stearylacrylat, Stearylmethacrylat, Isobornylacrylat, Isobornylmethacrylat; Hydroxyalkylester der Acrylsäure oder Methacrylsäure, wie β-Hydroxyethylacrylat, β-Hydroxyethylmethacrylat, β-Hydroxypropylacrylat, β-Hydroxypropylmethacrylat, Butandiol-1,4-monoacrylat, Butandiol-1,4-monomethacrylat, Hexandiol-1,6-monoacrylat, Hexandiol-1,6-monomethacrylat.

Zur Ausstattung des (Meth)acryl-Copolymerisats mit Carboxyl-Gruppen wird Acrylsäure in derartigen Mengen einpolymerisiert, daß für Komponente B) eine Säurezahl von 25 bis 50 mg KOH/g resultiert.

Die erfindungsgemäß verwendeten Überzugsmittel werden mit Vernetzungsmitteln wie Polyisocyanaten oder Polyisocyanatprepolymeren kombiniert zur Herstellung transparenter Deckschichten eines Mehrschichtüberzuges.

Der Anteil an Polyisocyanat-Vernetzer wird bevorzugt so gewählt, daß auf eine Hydroxyl-Gruppe der Bindemittel-Komponenten 0,5 bis 2,0 Isocyanat-Gruppen entfallen. Überschüssige Isocyanat-Gruppen können durch Feuchtigkeit abreagieren und zur Vernetzung beitragen. Es können aliphatische und/oder cycloaliphatische Polyisocyanate verwendet werden, wie Hexamethylendiisocyanat, Trimethylhexamethylendiisocyanat, Isophorondiisocyanat; Biuret-, Allophanat-, Urethan- oder Isocyanurat-Gruppen enthaltende Polyisocyanate. Die Polyisocyanate können gegebenenfalls partiell mit CH-, NH- und/oder OH-aciden Verbindungen verkappt sein.

Beispiele für derartige Polyisocyanate sind ein Biuret-Gruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N ^{R} BAYER AG) und ein Isocyanuratgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390 ^{R} BAYER AG).

Die Polyisocyanatvernetzer können partiell oder, falls ein über längere Zeit lagerfähiges, d.h. einkomponentiges Überzugsmittel gewünscht ist, vollständig mit aktiven Wasserstoff enthaltenden, monofunktionellen Verbindungen blockiert sein. Die Wahl des unter Rückbildung der freien Isocyanatgruppen thermisch wieder abspaltbaren Blockierungsmittels richtet sich nach den herrschenden Einbrennbedingungen bei der Aushärtung des erfindungsgemäßen Überzugsmittels. Beispiele für geeignete Blockierungsmittel sind Lactame, wie epsilon-Caprolactam, Oxime, wie Methylethylketoxim und Alkohole, wie 2-Ethylhexanol. Bevorzugt werden die Polyisocyanatvernetzer jedoch unverkappt eingesetzt.

Ebenso können die blockierten oder unblockierten Polyisocyanatvernetzer im erfindungsgemäßen Überzugsmittel teilweise durch übliche Aminoplastvernetzer ersetzt sein. Die (Meth)acryl-Copolymerisate A und B im erfindungsgemäßen Überzugsmittel können auch nur in Kombination mit üblichen Aminoplastvernetzern, d.h. ohne Kombination mit blockierten oder unblockierten Polyisocyanatvernetzern zu einkomponentigen Überzugsmitteln formuliert werden. Beispiele für Aminoplastvernetzer, wie Melamin- und Benzoguanaminharze, findet man in Karsten, Lackrohstoffe, Curt R. Vincentz Verlag, 9. Auflage 1992. Bevorzugt enthalten die erfindungsgemäßen Überzugsmittel jedoch keine Aminoplastvernetzer.

Die Überzugsmittel, welche das erfindungsgemäß einzusetzenden Bindemittel enthalten, können neben den bereits genannten Lösemitteln zusätzlich lackübliche Hilfsstoffe enthalten z.B. : Verlaufsmittel wie z.B. (Meth)acryl-Homopolymerisate, Silikonöle und Ricinusöl, das hydriert sein kann, Weichmacher, wie Phosphorsäure-, Phthalsäure- oder Zitronensäureester, Antiabsetzmittel, gegebenenfalls transparente Pigmente wie z.B. pyrogenes Siliziumoxid, rheologiesteuernde Mittel, wie z.B. Mikrogele, NAD's (Non-aqueons dispersions = nicht-wäßrige Dispersionen) und substituierte Polyharnstoffe, Lichtschutzmittel, wie z.B. Benztriazol- und/oder HALS-Derivate (hindered amine light stabilizers = sterisch gehinderte Amine als Lichtstabilisatoren).

Die erfindungsgemäßen Überzugsmittel können übliche Härtungsbeschleuniger enthalten, zeichnen sich jedoch insbesondere dadurch aus, daß sie, auch ohne (Schwermetall)katalysatoren zu enthalten, bei Temperaturen von 110 - 160°C, vorzugsweise unter 150°C zu hochglänzenden Überzügen ausgehärtet werden können.

Den erfindungsgemäßen Überzugsmitteln können zur Herstellung deckender Überzüge übliche deckende Pigmente zugesetzt werden.

Die erfindungsgemäßen Überzugsmittel können aus den Einzelkomponenten nach üblichen, dem Fachmann geläufigen Verfahren hergestellt werden. Dabei wird die Polyisocyanatkomponente bevorzugt kurz vor der Applikation hinzugefügt.

Die erfindungsgemäßen Überzugsmittel werden nach bekannten Verfahren, wie z.B. Spritzen, Tauchen, Rollen oder Rakeln, appliziert. Dabei wird auf das gegebenenfalls schon mit weiteren Lackschichten versehene Substrat der Decklacküberzug aufgetragen. Nach einer Abdunstphase wird das applizierte Überzugsmittel bevorzugt durch Erwärmen vernetzt. Die Einbrenntemperaturen liegen zwischen 110 bis 160°C, bevorzugt zwischen 120 bis 150°C. Die Vernetzung kann jedoch auch bei niedrigeren Temperaturen, beispielsweise bei 20 - 110°C, bevorzugt bei 25 bis 80°C durchgeführt werden. Die Schichtdicke des eingebrannten Films beträgt ca. 15 - 50 µm. Dabei entsteht ein vernetzter, harter, glänzender Lacküberzug. Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit erfindungsgemäß als Klarlacke formulierten Überzugsmitteln können beispielsweise Basislacke überlackiert werden, die übliche Decklackpigmente enthalten können, bevorzugt enthalten sie Effektpigmente, wie z.B. Metallic-Pigmente. Als Bindemittelbasis des Basislacks werden bevorzugt Polyester-, Polyurethan- oder Acrylatharze eingesetzt. Diese Bindemittel können gegebenenfalls über Vernetzer, z.B. Melamin- oder Isocyanatderivate, vernetzt werden.

Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z.B. für Haushaltsgeräte oder in der Möbelindustrie.

Die erfindungsgemäßen Überzugsmittel lassen sich mit Festkörpergehalten über 55 Gew.-% applizieren bei hervorragendem Verlauf und sie erlauben die Herstellung hochglänzender Mehrschichtlackierungen mit exzellentem Decklackstand.

Die erfindungsgemäßen Überzugsmittel sind besonders geeignet zur Herstellung einer transparenten Deckschicht eines lufttrocknenden oder ofentrocknenden Mehrschichtüberzüge. Sie eignen sich insbesondere für die Serienlackierung von Kraftfahrzeugkarosserien und deren Teilen. Sie weisen den Vorteil auf, daß sie mit einem hohen Verarbeitungsfestkörper appliziert werden können.

Die erfindungsgemäßen Überzugsmittel können naß-in-naß auf konventionelle, d.h. lösemittelhaltige oder wäßrige Lackschichten aufgetragen werden, worauf beide Schichten gemeinsam bei erhöhter Temperatur gehärtet werden. So ist es beispielsweise möglich, die transparenten Deckschichten, die aus den erfindungsgemäßen polyisocyanathaltigen Klarlacken aufgebracht werden, nach dem Naß-in-Naß-Verfahren auf konventionelle oder wäßrige Basislacke aufzutragen. Die beiden Schichten können dann gemeinsam gehärtet werden. Härtungstemperaturen liegen beispielsweise in der Größenordnung von 120 bis 150°C. Die Härtungszeiten liegen beispielsweise in der Größenordnung von 20 bis 40 Minuten.

Die Erfindung betrifft daher auch die Herstellung von Mehrschichtüberzügen bzw. die Verwendung der erfindungsgemäßen Überzugsmittel zur Herstellung von Decklackschichten, z.B. Klarlackschichten, für härtbare Mehrschichtüberzüge.

Die folgenden Beispiele dienen zur Erläuterung der Erfindung. Teile und Prozent beziehen sich auf das Gewicht.

### Beispiel 1 bis 3

### Herstellung der (Meth)acrylcopolymerisate der Komponenten A) und B).

### Herstellung der Komponente A):

In einen 2 Liter-Dreihals-Schliffkolben, der mit einem Rührwerk, Kontaktthermometer, Kugelkühler und Tropftrichter ausgerüstet ist, wird Pos. I (die Mengenangaben sind der Tabelle 1 zu entnehmen) vorgelegt und unter Rühren bei eingeschalteter Rückflußkühlung auf ca. 145°C geheizt. Innerhalb von 6 Stunden wird Pos. II (Monomerengemisch + Initiator) kontinuierlich aus dem Tropftrichter heraus zudosiert. Nach Zulaufende wird der Tropftrichter mit Pos. III nachgespült und zum Reaktionsgut hinzugefügt. Anschließend wird der Ansatz 3 Stunden bei ca. 143°C nachpolymerisiert, so daß die Umsetzung >99 % ist. Danach wird auf 100°C abgekühlt und mit Pos. IV auf einen Festkörper von ca. 65 % verdünnt.

### Herstellung der Komponente B):

In einen 2 Liter-Dreihals-Schliffkolben, der mit einem Rührwerk, Kontaktthermometer, Kugelkühler und Tropftrichter ausgerüstet ist, wird Pos. I (die Mengenangaben sind der Tabelle 1 zu entnehmen) vorgelegt und unter Rühren bei eingeschalteter Rückflußkühlung auf ca. 139°C geheizt. Innerhalb von 5 Stunden wird Pos. II (Monomerengemisch + Initiator) kontinuierlich aus dem Tropftrichter heraus zudosiert. Nach Zulaufende wird der Tropftrichter mit Pos. III nachgespült und zum Reaktionsgut hinzugefügt. Anschließend wird der Ansatz 5 Stunden bei ca. 135°C nachpolymerisiert, so daß die Umsetzung >99 % ist. Danach wird auf 100°C abgekühlt und mit Pos. IV auf einen Festkörper von ca. 50 % verdünnt.

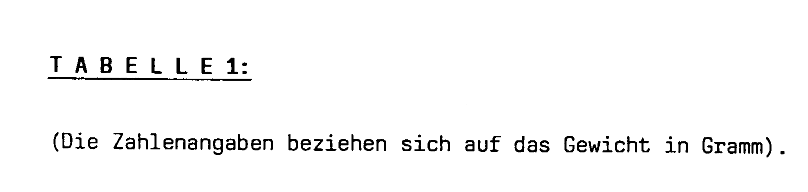

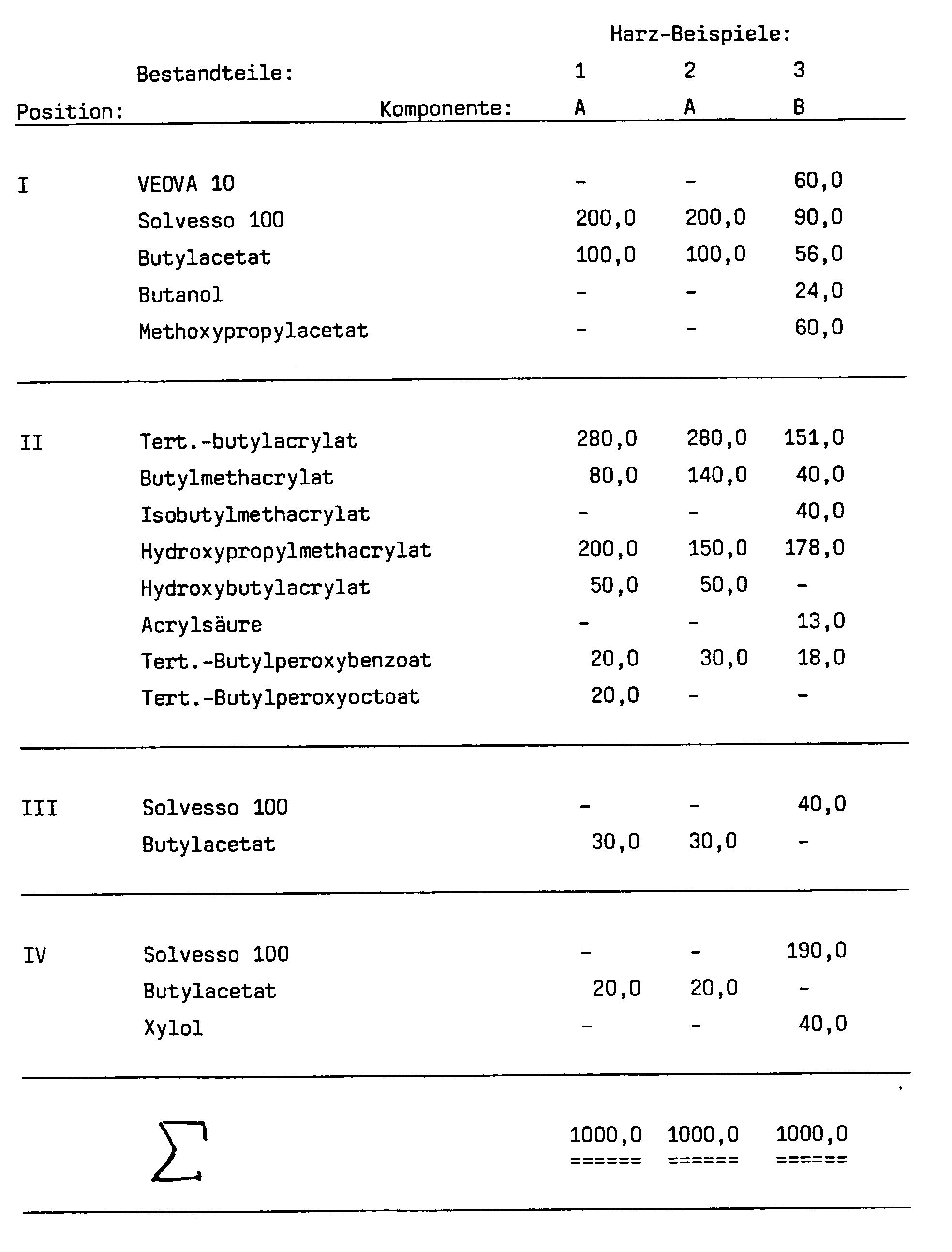

| Kennzahlen: | | | |
|---|---|---|---|
| Festkörper (%): | 65,7 | 65,9 | 50,4 |
| Viskosität (mPas b. 25°C): | 535 | 560 | 130 |
| Hydroxyl-Zahl (bez.a. Festharz): | 150 | 120 | 138 |
| Säurezahl (bez.a. Festharz): | 4,1 | 4,8 | 28,9 |
| Glasübergangstemperatur (°C): | 11 | 24 | 31 |

- VEOVA 10 =: Versaticsäurevinylester
- Solvesso 100 =: Lösemittel (Gemisch aromatischer Kohlenwasserstoffe mit einem Siedebereich von 162 - 180°C).

### Herstellung von Mehrschichtlackierungen

### Beispiel 4

409 Teile der Harzlösung aus Beispiel 3 und 323 Teile der Harzlösung aus Beispiels 1 werden homogen gemischt und danach werden unter dem laufenden Rührer 21 Teile eines handelsüblichen Phthalats, 24 Teile eines Gemisches handelsüblicher Lichtschutzmittel (HALS- und Benztriazolderivat im Verhältnis 1 : 1), 23 Teile einer 1 %igen xylolischen Lösung handelsüblicher Silikonöle (Verlaufs- und Benetzungsmittel) und 180 Teile eines Lösemittelgemisches aus Butyldiglykolacetat, Ethoxypropylacetat, Butylglykolacetat und hochsiedenden aromatischen Kohlenwasserstoffen im Verhältnis 13 : 10 : 12 : 65 zugegeben.

In 100 Teile dieser Lösung werden 30 Teile einer 82 %igen Lösung eines aliphatischen Isocyanuratpolyisocyanats in Xylol/Butylacetat (1 : 1) homogen eingerührt. Dieser Klarlack wurde wie nachstehend erläutert zur' Herstellung einer Mehrschichtlackierung verwendet:

Mit in der Automobilserienlackierung verwendetem handelsüblichem kathodisch abscheidbarem Elektrotauchlack (KTL) (18 µm) und handelsüblichem Füller (35 µm) vorbeschichtete Karosseriebleche wurden mit handelsüblichem wasserverdünnbarem Metallicbasislack in einer Trockenschichtdicke von 15 µm lackiert und 6 min. bei 80°C vorgetrocknet. Direkt anschließend wurde der vorstehend beschriebene Klarlack in einer Trockenschichtdicke von 35 µm durch Spritzauftrag naß-in-naß appliziert und nach 5 min. Ablüften bei Raumtemperatur 20 min. bei 140°C (Objekttemperatur) eingebrannt.

### Beispiel 5

Es wird analog zu Beispiel 4 gearbeitet, mit dem Unterschied, daß anstelle von 409 Teilen der Harzlösung aus Beispiel 3 und 323 Teilen der Harzlösung aus Beispiel 1 414 Teile der Harzlösung aus Beispiel 3 und 318 Teile der Harzlösung aus Beispiel 2 verwendet wurden.

### Beispiel 6

Es wird analog zu Beispiel 4 gearbeitet, mit dem Unterschied, daß anstelle von 409 Teilen der Harzlösung aus Beispiel 3 und 323 Teilen der Harzlösung aus Beispiel 1 156 Teile der Harzlösung aus Beispiel 1 und 581 Teile der Harzlösung aus Beispiel 3 verwendet wurden.

### Beispiel 7

Es wird analog zu Beispiel 4 gearbeitet, mit dem Unterschied, daß anstelle von 180 Teilen des Lösemittelgemisches nur 100 Teile verwendet werden.

Trotz hoher Verarbeitungsfestkörper der mit den in den Beispielen 4 bis 6 beschriebenen Klarlacke war der Verlauf hervorragend und es ergaben sich hochglänzende Mehrschichtlackierungen mit ausgezeichnetem Decklackstand.

## Patentansprüche

1. Überzugsmittel, geeignet zur Herstellung transparenter Deckschichten, enthaltend ein oder mehrere Bindemittel auf der Basis hydroxyfunktioneller (Meth)acryl-Copolymerisate, einen oder mehrere Vernetzer auf der Basis aliphatischer und/oder cycloaliphatischer Polyisocyanate, ein oder mehrere Lösemittel sowie lackübliche Additive, dadurch gekennzeichnet, daß die Bindemittel Gemische enthalten aus
A) 40 - 60 Gew.-% eines oder mehrerer hydroxylgruppenhaltiger (Meth)acryl-Copolymerisate, erhältlich durch Copolymerisation von
a1) 50 - 70 Gew.-% eines oder mehrerer Acrylsäureester, die im Gemisch mit einem solchen Anteil eines oder mehrerer Acrylsäure-hydroxyalkylester vorliegen, daß die Hydroxylzahl des Gemisches 40 - 70 mg KOH/g beträgt, und
a2) 30 - 50 Gew.-% eines oder mehrerer Methacrylsäureester, die im Gemisch mit einem solchen Anteil eines oder mehrerer Methacrylsäure-hydroxyalkylester vorliegen, daß die Hydroxylzahl des Gemisches 180 - 450 mg KOH/g beträgt, und
B) 60 - 40 Gew.-% eines oder mehrerer hydroxylgruppenhaltiger (Meth)acryl-Copolymerisate, die erhältlich sind durch Copolymerisation von:
b1) 27 - 40 Gew.-% eines oder mehrerer Acrylsäure-alkylester,
b2) 49 - 55 Gew.-% eines oder mehrerer Methacrylsäureester, die im Gemisch mit einem solchen Anteil eines oder mehrerer Methacrylsäure-hydroxyalkylester vorliegen, daß die Hydroxylzahl des Gemisches 240 - 300 mg KOH/g beträgt,
b3) 1 - 3 Gew.-% Acrylsäure,
b4) 10 - 15 Gew.-% eines oder mehrerer Vinylester aliphatischer gesättigter Monocarbonsäuren, bei denen die Carboxylgruppe an ein tertiäres Kohlenstoffatom gebunden ist,
wobei die Summe der Komponenten A) und B), die Summe der Komponenten a1) und a2) sowie die Summe der Komponenten bl) bis b4) jeweils 100 Gew.-% beträgt.

2. Überzugsmittel nach Anspruch 1, dadurch gekennzeichnet, daß das aliphatische und/oder cycloaliphatische Polyisocyanat in einer solchen Menge vorhanden ist, daß auf eine Hydroxylgruppe der Bindemittelbestandteile A) und B) jeweils 0,5 bis 2,0 Isocyanatgruppen entfallen.

3. Überzugsmittel nach Anspruch 1 oder 2, dadurch gekennzeichnet, daß die Komponente A) eine Hydroxylzahl von 120 bis 170 mg KOH/g, ein Gewichtsmittel der Molmasse (Mw) von 3000 bis 5000 und eine Glasübergangstemperatur Tg von 10°C bis + 30°C aufweist.

4. Überzugsmittel nach Anspruch 1, 2 oder 3, dadurch gekennzeichnet, daß die Komponente B) eine Säurezahl von 25 bis 50 mg KOH/g, eine Hydroxylzahl von 120 - 160 mg KOH/g, ein Gewichtsmittel der Molmasse (Mw) von 5000 bis 8000 und eine Glasübergangstemperatur Tg von + 20°C bis + 50°C aufweist.

5. Verfahren zur Herstellung der Überzugsmittel nach einem der vorhergehenden Ansprüche, dadurch gekennzeichnet, daß man
A) ein Copolymerisat herstellt durch Copolymerisation von
a1) 50 - 70 Gew.-% eines oder mehrerer Acrylsäureester, die im Gemisch mit einem solchen Anteil eines oder mehrerer Acrylsäure-hydroxyalkylester vorliegen, daß die Hydroxylzahl des Gemisches 40 - 70 mg KOH/g beträgt, und
a2) 30 - 50 Gew.-% eines oder mehrerer Methacrylsäureester, die im Gemisch mit einem solchen Anteil eines oder mehrerer Methacrylsäure-hydroxyalkylester vorliegen, daß die Hydroxylzahl des Gemisches 180 - 450 mg KOH/g beträgt, und
B) ein weiteres Copolymerisat herstellt durch Copolymerisation von
b1) 27 - 40 Gew.-% eines oder mehrerer Acrylsäure-alkylester,
b2) 49 - 55 Gew.-% eines oder mehrerer Methacrylsäureester, die im Gemisch mit einem solchen Anteil eines oder mehrerer Methacrylsäure-hydroxyalkylester vorliegen, daß die Hydroxylzahl des Gemisches 240 - 300 mg KOH/g beträgt,
b3) 1 - 3 Gew.-% Acrylsäure,
b4) 10 - 15 Gew.-% eines oder mehrerer Vinylester aliphatischer gesättigter Monocarbonsäuren, bei denen die Carboxylgruppe an ein tertiäres Kohlenstoffatom gebunden ist
und danach 40 - 60 Gew.-% des erhaltenen Copolymerisats A) mit 60 - 40 Gew.-% des erhaltenen Copolymerisats B) mit einem oder mehreren Lösemitteln, und gegebenenfalls lacküblichen Additiven vermischt und unmittelbar vor der Anwendung ein oder mehrere aliphatische und/oder cycloaliphatische Polyisocyanate in einer derartigen Menge zusetzt, daß auf eine Hydroxylgruppe der Copolymerisate A) und B) jeweils 0,5 bis 2,0 Isocyanatgruppen entfallen.

6. Verfahren zur Herstellung eines Mehrschichtüberzugs, dadurch gekennzeichnet, daß man auf ein Substrat, das mit einer Grundierungsschicht, einem Füller und/oder weiteren Zwischenschichten versehen sein kann, eine Basislackschicht auf der Basis von lösemittelhaltigen oder wäßrigen Basislacken aufbringt und auf diese nach kurzem Ablüften oder Härten einen Decklack aus einem Überzugsmittel gemäß einem der Ansprüche 1 bis 4 aufbringt.

7. Verfahren nach Anspruch 6, dadurch gekennzeichnet, daß man eine Basislackschicht auf der Basis wäßriger Basislacke aufbringt.

8. Verfahren nach Anspruch 6 oder 7, dadurch gekennzeichnet, daß man den Decklacküberzug durch Spritzauftrag aufbringt und dabei das Überzugsmittel mit einem Festkörpergehalt von über 55 Gew.-% einsetzt.

9. Verwendung der Überzugsmittel nach einem der Ansprüche 1 bis 4 zur Herstellung transparenter Deckschichten auf Mehrschichtüberzügen.

## Claims

1. A coating medium suitable for the production of transparent covering coats, containing one or more binder vehicles based on hydroxy-functional (meth)acrylic copolymers, one or more crosslinking agents based on aliphatic and/or cycloaliphatic polyisocyanates, one or more solvents, and customary lacquer additives, characterised in that the binder vehicles contain mixtures of
A) 40 - 60 % by weight of one or more (meth)acrylic copolymers containing hydroxyl groups, obtainable by the copolymerisation of
a1) 50 - 70 % by weight of one or more acrylic acid esters which are present in the mixture with a proportion of one or more acrylic acid hydroxyalkyl esters such that the hydroxyl number of the mixture is 40 - 70 mg KOH/g, and
a2) 30 - 50 % by weight of one or more methacrylic acid esters which are present in the mixture with a proportion of one or more methacrylic acid hydroxyalkyl esters such that the hydroxyl number of the mixture is 180 - 450 mg KOH/g, and
B) 60 - 40 % by weight of one or more (meth)acrylic copolymers containing hydroxyl groups which obtainable by the copolymerisation of :
b1) 27 - 40 % by weight of one or more acrylic acid alkyl esters.
b2) 49 - 55 % by weight of one or more methacrylic acid esters which are present in the mixture with a proportion of one or more methacrylic acid hydroxyalkyl esters such that the hydroxyl number of the mixture is 240 - 300 mg KOH/g,
b3) 1 - 3 % by weight of acrylic acid,
b4) 10 - 15 % by weight of one or more vinyl esters of aliphatic saturated monocarboxylic acids in which the carboxyl group is bonded to a tertiary carbon atom,
wherein the sum of components A) and B), the sum of components a1) and a2) and the sum of components b1) to b4) amounts to 100 % in each case.

2. A coating medium according to claim 1, characterised in that the aliphatic and/or cycloaliphatic polyisocyanate is present in an amount such that 0.5 to 2.0 isocyanate groups are allotted to each hydroxyl group of binder vehicle components A) and B).

3. A coating medium according to claim 1 or 2, characterised in that component A) has a hydroxyl number from 120 to 170 mg KOH/g, a weight average molecular weight (Mw) from 3000 to 5000, and a glass transition temperature Tg from 10°C to + 30°C.

4. A coating medium according to claims 1, 2 or 3, characterised in that component B) has an acid number from 25 to 50 mg KOH/g, a hydroxyl number from 120 - 160 mg KOH/g, a weight average molecular weight (Mw) from 5000 to 8000. and a glass transition temperature Tg from + 20°C to + 50°C.

5. A method of producing the coating media according to any one of the preceding claims, characterised in that
A) a copolymer is produced by the copolymerisation of
a1) 50 - 70 % by weight of one or more acrylic acid esters which are present in the mixture with a proportion of one or more acrylic acid hydroxyalkyl esters such that the hydroxyl number of the mixture is 40 - 70 mg KOH/g, and
a2) 30 - 50 % by weight of one or more methacrylic acid esters which are present in the mixture with a proportion of one or more methacrylic acid hydroxyalkyl esters such that the hydroxyl number of the mixture is 180 - 450 mg KOH/g, and
B) a further copolymer is produced by the copolymerisation of
b1) 27 - 40 % by weight of one or more acrylic acid alkyl esters,
b2) 49 - 55 % by weight of one or more methacrylic acid esters which are present in the mixture with a proportion of one or more methacrylic acid hydroxyalkyl esters such that the hydroxyl number of the mixture is 240 - 300 mg KOH/g,
b3) 1 - 3 % by weight of acrylic acid,
b4) 10 - 15 % by weight of one or more vinyl esters of aliphatic saturated monocarboxylic acids in which the carboxyl group is bonded to a tertiary carbon atom,
and thereafter 40 - 60 % by weight of copolymer A) which is obtained and 60 - 40 % by weight of copolymer B) which is obtained are mixed with one or more solvents and optionally with customary lacquer additives and one or more aliphatic and/or cycloaliphatic polyisocyanates are added directly before application in an amount such that 0.5 to 2.0 isocyanate groups are allotted to each hydroxyl group of copolymers A) and B).

6. A method of producing a multilayer coating, characterised in that a base lacquer based on solvent-containing or aqueous base lacquers is applied to a substrate which may be provided with a primer coat, a primer surfacer and/or further intermediate coats, and a covering lacquer comprising a coating medium according to any one of claims I to 4 is applied to the base lacquer coat after a brief ventilation or hardening.

7. A method according to claim 6, characterised in that a base lacquer coat based on aqueous base lacquers is applied.

8. A method according to claim 6 or 7, characterised in that the covering lacquer coat is applied by spray application and the coating medium is used in this procedure at a solids content greater than 55 % by weight.

9. Use of the coating media according to any one of claims I to 4 for producing transparent covering coats on multilayer coatings.

## Revendications

1. Agent de revêtement, approprié à la préparation de couches de couverture transparentes, contenant un ou plusieurs liants à base de copolymères (méth)acryliques à fonction hydroxy, un ou plusieurs durcisseurs à base de polyisocyanates aliphatiques, et/ou cycloaliphatiques, un ou plusieurs solvants, ainsi que des additifs usuels en peinture, caractérisé en ce que les liants contiennent des mélanges de
A) 40 à 60% en poids d'un ou plusieurs copolymères (méth)acryliques contenant des groupes hydroxy, qu'on peut obtenir par copolymérisation de
a1) 50 à 70% en poids d'un ou plusieurs esters d'acide acrylique, qui sont en mélange d'une teneur telle d'un ou plusieurs acrylates d'hydroxyalkyle, que l'indice d'hydroxyle du mélange est 40 - 70 mg KOH/g, et
a2) 30 à 50% en poids d'un ou plusieurs esters d'acide méthacrylique qui sont en mélange avec une teneur telle d'un ou plusieurs méthacrylates d'hydroxyalkyle, que l'indice d'hydroxyle du mélange est 180 - 450 mg KOH/g, et
B) 60 à 40% en poids d'un ou plusieurs copolymères (méth)acryliques contenant des groupes hydroxyles, qu'on obtient par copolymérisation de :
b1) 27 à 40% en poids d'un ou plusieurs acrylates d'alkyle,
b2) 49 à 55% en poids d'un ou plusieurs méthacrylates qui sont en mélange avec une teneur telle d'un ou plusieurs méthacrylates d'hydroxyalkyle que l'indice d'hydroxyle du mélange est 240 - 300 mg KOH/g,
b3) 1 à 3% en poids d'acide acrylique,
b4) 10 à 15% en poids d'un ou plusieurs esters vinyliques d'acides monocarboxyliques aliphatiques saturés, dans lesquels le groupe carboxyle est lié à un atome de carbone tertiaire,
où la somme des composants A) et B), la somme des composants a1) et a2), ainsi que la somme des composants b1) à b4) représente 100% en poids respectivement.

2. Agent de revêtement selon la revendication 1, caractérisé en ce que le polyisocyanate aliphatique et/ou cycloaliphatique est présent en une quantité telle que pour un groupe hydroxyle des composants de liant A) et B), il existe respectivement 0,5 à 2,0 groupes d'isocyanates.

3. Agent de revêtement selon la revendication 1 ou 2, caractérisé en ce que le composant A) présente un indice d'hydroxyle de 120 à 170 mg KOH/g, une masse molaire moyenne en poids (Mw) de 3000 à 5000 et une température de transition vitreuse Tg de 10°C à +30°C.

4. Agent de revêtement selon la revendication 1, 2 ou 3, caractérisé en ce que le composant B) présente un indice d'acide de 25 à 50 mg KOH/g, un indice d'hydroxyle de 120 - 160 mg KOH/g, une masse molaire moyenne en poids (Mw) de 5000 à 8000 et une température de transition vitreuse Tg de +20°C à +50°C.

5. Procédé de préparation de l'agent de revêtement selon l'une des revendications précédentes, caractérisé en ce que
A) On prépare un copolymère par copolymérisation de
a1) 50 à 70% en poids d'un ou plusieurs esters d'acide acrylique, qui sont en mélange d'une teneur telle d'un ou plusieurs acrylates d'hydroxyalkyle, que l'indice d'hydroxyle du mélange est de 40 - 70 mg KOH/g, et
a2) 30 à 50% en poids d'un ou plusieurs esters d'acide méthacrylique qui sont en mélange avec une teneur telle d'un ou plusieurs méthacrylates d'hydroxyalkyle que l'indice d'hydroxyle du mélange est 180 - 450 mg KOH/g, et
B) On prépare un autre copolymère par copolymérisation de
b1) 27 à 40% en poids d'un ou plusieurs acrylates d'alkyle,
b2) 49 à 55% en poids d'un ou plusieurs méthacrylates, qui sont en mélange avec une teneur telle d'un ou plusieurs méthacrylates d'hydroxyalkyle, que l'indice d'hydroxyle du mélange est 240 - 300 mg KOH/g,
b3) 1 à 3% en poids d'acide acrylique,
b4) 10 à 15% en poids d'un ou plusieurs esters vinyliques d'acides monocarboxyliques aliphatiques saturés, dans lesquels le groupe carboxyle est lié à un atome de carbone tertiaire,
et ensuite on mélange 40 à 60% en poids du copolymère A) obtenu avec 60 à 40% en poids du copolymère B) avec un ou plusieurs solvants, et le cas échéant, des additifs usuels des peintures et juste avant l'utilisation ou ajoute un ou plusieurs polyisocyanates aliphatiques et/ou cycloaliphatiques en une quantité telle que pour un groupe hydroxyle des copolymères A) et B) existe respectivement 0,5 à 2,0 groupes isocyanates.

6. Procédé de préparation d'un revêtement multicouche, caractérisé en ce que sur un substrat, qui peut être muni d'une couche de fond, d'une couche de garnissage et/ou d'autres couches intermédiaires, on dépose une couche de peinture de base à base de peintures de base à l'eau ou à solvants, et sur celles-ci, après séchage rapide ou durcissement on dépose une peinture de couverture à base d'un agent de revêtement selon l'une des revendications 1 à 4.

7. Procédé selon la revendication 6, caractérisé en ce qu'on dépose une couche de peinture de base à base de peintures de base aqueuses.

8. Procédé selon la revendication 6 ou 7, caractérisé en ce qu'on dépose le revêtement de peinture de couverture par pulvérisation et qu'ainsi le revêtement a une teneur en solides supérieure à 55% en poids.

9. Utilisation du revêtement selon l'une ces revendications 1 à 4, pour préparer des couches de couverture transparentes à l'aide de revêtements multicouches.
